# EUROPÄISCHE PATENTSCHRIFT

(11) **EP 2 296 433 B1**
(45) Veröffentlichungstag und Bekanntmachung des Hinweises auf die Patenterteilung: **22.06.2016**
(21) Anmeldenummer: 10009372.3
(22) Anmeldetag: 09.09.2010
(51) Int. Cl.: H05B 3/48, H05B 3/58

(54) **Elektrische Heizvorrichtung und Verfahren zur Herstellung einer elektrischen Heizvorrichtung**
Electrical heating assembly and method for manufacturing same
Dispositif de chauffage électrique et procédé de fabrication d'un dispositif de chauffage électrique

(30) Priorität: 10.09.2009 DE 102009040809
(43) Veröffentlichungstag der Anmeldung: 16.03.2011
(73) Patentinhaber: Turk & Hillinger GmbH, 78532 Tuttlingen (DE)
(72) Erfinder: Schlipf, Andreas, 78532 Tuttlingen (DE)
(74) Vertreter: Westphal, Mussgnug & Partner Patentanwälte mbB

(56) Entgegenhaltungen:
- DE-C1- 3 505 517
- DE-U1- 8 800 261
- DE-U1-202007 010 865
- DE-U1-202008 016 439
- GB-A- 1 028 398

## Beschreibung

Die Erfindung betrifft eine elektrische Heizvorrichtung mit den Merkmalen des Oberbegriffs des Patentanspruchs 1 und ein Verfahren zur Herstellung einer solchen elektrischen Heizvorrichtung. Derartige Heizvorrichtungen werden beispielsweise zum Beheizen von Werkzeugen, Maschinenteilen und Geräten, insbesondere von Kunststoffspritzdüsen verwendet. Ihre Anwendung ist aber nicht auf diesen Zweck beschränkt; beispielsweise ist es möglich, Fluide durch Durchleitung durch diese Art von Heizvorrichtung auf eine gewünschte Temperatur zu bringen.Alternativ können auch stehende Fluide oder ein Dehnwachs auf eine gewünschte Temperatur gebracht werden.

Besonders populäre Ausführungsformen derartiger Heizvorrichtungen sind solche mit zylindrischer Geometrie und sogenannte elektrische Flachheizkörper, die eine im Wesentlichen ebene Geometrie aufweisen, die in einigen Ausgestaltungen durch Umformen in eine nahezu beliebige Gestalt umgewandelt werden können. Heizvorrichtungen mit zylindrischer Geometrie sind beispielsweise aus der DE 201 09 413 U1, der EP 1 395 085 B1 oder der DE 103 33 206 B4 bekannt.

Flachheizkörper sind beispielsweise aus der DE 72 25 341, der DE 71 10 931, der DE 201 08 963 U1 und der DE 201 18 050 U1 bekannt.

Die bekannten elektrischen Heizvorrichtungen bestehen in der Regel aus zwei beabstandet voneinander angeordneten Grenzflächen, zwischen denen ein in der Regel rohrförmiges Heizelement, das den eigentlichen Heizleiter umfasst, eingebettet ist. Aus dem Stand der Technik sind im Wesentlichen zwei Ansätze zum Erzielen einer möglichst guten Wärmeabnahme bei der Einbettung bekannt, nämlich das Eingießen des rohrförmigen Heizelementes und das Einbringen des rohrförmigen Heizelementes in Nuten einer Metall- oder Isolierstoffoberfläche. All diese Ansätze haben, wie nachfolgend erläutert wird, erhebliche Nachteile.

Beim Eingießen des rohrförmigen Heizelementes stellt sich das Problem spontaner Lunkerbildung. Diese führt zu mangelhafter Wärmeabnahme und dem Ausfall des Heizelements.

Soweit vorgeschlagen wird, einen Heizleiter in einen als Zwischenschicht oder als Grenzfläche dienenden Körper, insbesondere eine Platte oder ein Rohr mit darin vorgesehenen Ausnehmungen oder Nuten, einzubetten, ist der hohe Arbeitsaufwand, der mit der Erzeugung der Nuten Einbettung einhergeht ungünstig. Ferner ist es schwierig, bei einer derartigen Einbettung sicherzustellen, dass der thermische Kontakt zwischen dem Heizelement und der Isolierstoffplatte homogen, also an alles Stellen gleich gut ist. Wird dies aber nicht erreicht, kommt es zu lokal mangelhafter Wärmeabnahme, die schließlich den Ausfall der Heizung mit sich bringt.

Soweit vorgeschlagen wird, das als Rohrheizkörper ausgeführte Heizelement in aufeinanderliegende Grenzflächen aus Metall, eine Trägerstruktur oder ein Umfassungsblech einzudrücken, ist problematisch, dass der Kraftaufwand, der notwendig ist, um ein völliges Umschließen des Heizelements zu erreichen, so hoch ist, dass das Heizelement in seiner Funktion empfindlich beeinträchtigt wird. Es kommt zu Deformationen und Verdichtungen, die zu einer lokalen Änderung des ohmschen Widerstands führen. Ferner kann es zu einer unkontrollierten Verschiebung der Wicklungen des Heizelements kommen, so dass das angestrebte Temperaturprofil auf der Oberfläche des elektrischen Heizelements nicht mehr erreicht wird. Schließlich hat sich gezeigt, dass die anzuwendenden Drücke so hoch sind, dass die Metallplatten zu fließen beginnen, was zu einer undefinierten Längung des elektrischen Heizelements führt.

Zu alledem ist dies auch nicht für beliebige Geometrien des Heizelements möglich. Insbesondere dichte Wicklungen mit kleinen Steigungen kommt es nicht zu einer vollständigen Umschließung der Wicklungen, also zu einer lokal mangelhaften Wärmeabnahme, die mit den bereits oben erwähnten Ausfallrisiken einhergeht.

Aus der GB 1 028 398 ist ein elektrischer Durchlauferhitzer mit wenigstens einem rohrförmigen Heizelement, das einen Metallmantel aufweist, mit zwei Begrenzungsflächen aus Metall, die durch Veränderung eines äußeren Metallrohres und eines in dem äußeren Metallrohr angeordneten inneren Metallrohres gebildet werden, wobei das rohrförmige Heizelement zwischen der ersten und der zweiten Begrenzungsfläche aus Metall angeordnet ist und der Raum zwischen den Begrenzungsflächen aus Metall, in dem das rohrförmige Heizelement angeordnet ist, mit einem Pulver oder Granulat befüllt ist, bekannt.

Aufgabe der Erfindung ist daher das Bereitstellen einer günstig herzustellenden elektrischen Heizvorrichtung mit verbesserter, insbesondere zuverlässigerer Wärmeabnahme und eines Verfahrens zur Herstellung einer derartigen elektrischen Heizvorrichtung.

Diese Aufgabe wird gelöst durch eine elektrische Heizvorrichtung mit den Merkmalen des Patentanspruchs 1. Vorteilhafte Ausgestaltungen der Erfindung sind den Unteransprüchen zu entnehmen.

Die erfindungsgemäße elektrische Heizvorrichtung hat wenigstens ein rohrförmiges Heizelement mit einem Metallmantel, das zumindest teilweise in mindestens einem Pulver oder Granulat eingebettet ist. Ganz allgemein handelt es sich bei derartigen Heizelementen um eine oder mehrere Heizwendeln, die in einen elektrisch isolierenden Kern, insbesondere einen Metalloxid-Kern eingebettet sind, der seinerseits durch einen Metallmantel, insbesondere einen Stahlmantel umschlossen wird. Konkrete Ausführungsformen sind z.B. allgemein bekannte Rohrwendelpatronen und Rohrheizkörper.

Das Pulver oder Granulat liegt dabei zumindest teilweise an einer Begrenzungsfläche an. Zumindest Teile einer Grenzschicht des Pulvers oder Granulats stehen also mit der Begrenzungsfläche in direktem Kontakt. Die Begrenzungsfläche kann insbesondere eine Metallplatte oder ein Metallrohr sein, ihre Form lässt sich aber an die jeweiligen Anforderungen der Anwendung anpassen. Der Rohrquerschnitt des rohrförmigen Heizelements kann dabei beliebig geformt, insbesondere kreisförmig oder in Form eines Vielecks sein.

Dass das rohrförmige Heizelement "zumindest teilweise eingebettet" ist, bedeutet dabei, dass die Einbettung durch das Pulver oder Granulat nicht notwendigerweise um den gesamten Umfang des rohrförmigen Heizelementes herum erfolgen muss. Es ist auch möglich und je nach Einsatzgebiet des elektrischen Flächenheizelements sinnvoll, dass das rohrförmige Heizelement mit einem Teil seines Umfangs mit einer Begrenzungsfläche, die dem zu beheizenden Bauteil zugewandt oder von diesem abgewandt ist, in direktem Kontakt steht.

Die Einbettung des rohrförmigen Heizelementes in ein Pulver oder in ein Granulat hat erhebliche Vorteile. Weder ist das Einbringen einer Nut in eine Platte erforderlich noch ist das Aufbringen so hohen Drucks notwendig, dass ein weitgehendes Eindrücken des rohrförmigen Heizelementes erfolgt, und ein Gussprozess wird vollständig vermieden. Ferner wird durch Verwendung eines Pulvers automatisch ein hoher Grad von Homogenität des thermischen Kontakts zwischen Heizelement und Umgebung erreicht. Besonders gute Ergebnisse lassen sich dabei überraschenderweise bei der Verwendung von Granulaten erzielen. Granulate unterscheiden sich von Pulvern durch ihre gröbere Struktur, die sich in größeren Körnern ausdrückt und lassen sich insbesondere durch Kornvergrößerungsprozesse aus Pulvern erzeugen. Besonders bevorzugt werden dabei Metallgranulate mit deren Ausdehnung in jeder beliebigen Raumrichtung zu einer mittleren Korngröße zwischen 0,1 und 1 mm führt.

In einer nicht erfindungsgemäßen Ausführungsform ist genau eine Begrenzungsfläche vorhanden, mit der das rohrförmige Heizelement und das Pulver oder Granulat zu einer kompakten Einheit verpresst sind. Dabei ist zu berücksichtigen, dass die zum Verpressen des Pulvers oder Granulats deutlich niedrigere Drücke erforderlich sind als zum Einpressen eines rohrförmigen Heizelements in eine Metallplatte, so dass die dort auftretenden Probleme hier vermieden werden.

Eine derartige Einheit erhält man beispielsweise, wenn die Begrenzungsfläche in einem Gesenk angeordnet wird, das Pulver oder Granulat in die Hohlräume des Gesenks hinzugefügt wird, das Heizelement in der gewünschten Weise in dem Pulver oder Granulat angeordnet wird und dann im Gesenk das Verpressen durchgeführt wird. Eine andere Möglichkeit besteht darin, zunächst in einem Gesenk das Pulver und das rohrförmige Heizelement zu einer selbsttragenden Baugruppe zu verdichten und erst danach den Kontakt mit einer Begrenzungsfläche, die in diesem Fall auch von der Oberfläche der zu beheizenden Baugruppe gebildet werden könnte, hergestellt wird.

Durch diese Vorgehensweisen erhält man eine elektrische Heizvorrichtung, die als besonders materialsparende Baugruppe weiterverwendet werden kann.

In einer besonders bevorzugten Variante dieser Ausführungsform ist die Begrenzungsfläche aus Metall ein Rohr, das vom Pulver oder Granulat und dem darin eingebetteten Heizelement ganz oder teilweise umgeben wird, so dass das Rohr als Innenrohr oder Innenmantel dient, oder das das Pulver oder Granulat und das darin eingebettete Heizelement als Außenrohr oder Außenmantel umschließt. Diese geometrische Anordnung lässt sich für viele Arten von Düsen nutzen. Ob das Rohr als Innenrohr oder Außenrohr eingesetzt wird, hängt von Einzelheiten der Anwendung ab.

Gemäß der Erfindung ist zusätzlich mindestens eine zweite Begrenzungsfläche aus Metall vorhanden und das rohrförmige Heizelement zwischen der ersten und der zweiten Begrenzungsfläche aus Metall angeordnet. Das an der ersten Begrenzungsfläche aus Metall anliegende Pulver oder Granulat füllt dabei den Raum zwischen der ersten und der zweiten Begrenzungsflächen aus Metall, soweit dieser nicht schon durch das rohrförmige Heizelement ausgefüllt ist.

Eine besonders bevorzugte elektrische Heizvorrichtung, die insbesondere zur Beheizung von zylindrischen Bauteilen wie z.B. Kunststoffspritzdüsen einsetzbar ist, weist ein äußeres Metallrohr, und ein inneres Metallrohr, das im äußeren Metallrohr angeordnet ist, sowie wenigstens ein rohrförmiges Heizelement, das einen Metallmantel besitzt, auf. Das rohrförmige Heizelement ist dabei zwischen den Metallrohren angeordnet und zumindest teilweise in mindestens einem Pulver oder Granulat eingebettet, mit dem der Bereich zwischen dem äußeren Metallrohr und dem inneren Metallrohr gefüllt ist. Zweckmäßigerweise verwendet man dabei innere und äußere Metallrohre gleicher Länge, deren Längsachsen im Wesentlichen parallel zueinander liegen.

Ein Rohr im Sinne dieser Erfindung muss dabei keine durchbrechungsfreie Mantelfläche haben, insbesondere wird auch wenn eine Ausnehmung, z.B. ein Schlitz oder Spalt, die Mantelfläche in axialer Richtung über ihre ganze Länge durchsetzt, die Struktur also z.B. durch Aufprägen einer konstanten Krümmung auf ein Metallband erzeugt werden kann, der Begriff Rohr verwendet. Ebenso wenig ist diesem Begriff eine Einschränkung hinsichtlich des Querschnitts des Rohres zu entnehmen, insbesondere kann dieser nicht nur rund, sondern auch elliptisch, gewinkelt oder vieleckig sein. Auch eine Querschnitts- und insbesondere Durchmesservariation fällt darunter, zu dass konisch zulaufende Rohre ebenfalls unter dem Oberbegriff "Rohr" gefasst werden.

Wenn eine symmetrische Beheizung gewünscht ist, ist es besonders vorteilhaft, wenn das äußere Metallrohr und das innere Metallrohr konzentrisch zueinander angeordnet sind.

Vorteilhaft kann es sein, wenn die erste und die zweite Begrenzungsfläche durch mindestens eine weitere Begrenzungsfläche fest miteinander verbunden, insbesondere aus einem Teil gefräst oder aus einem Blech gezogen sind.

Vorteilhaft zu verwendende Heizelemente bestehen aus einer gebogenen oder gewendelten, vorzugsweise verdichteten Rohrwendelpatrone oder aus einem gebogenen oder gewendelten, vorzugsweise verdichteten Rohrheizkörper. Sie können auch als Rohrwendel in den Rohrkörper eingewendelt sein.

Die Auswahl des Pulvers oder Granulats lässt sich an die Erfordernisse der Anwendung anpassen. Es ist möglich, Pulver oder Granulate aus Metall, insbesondere aus Aluminium, Messing oder Kupfer zu verwenden, aber auch Metalloxide, Quarzsand oder keramische Massen. Insbesondere kann es vorteilhaft sein, das Flächenheizelement ganz oder teilweise zu verdichten. Dadurch wird eine noch bessere Wärmeleitung, insbesondere hinsichtlich der Homogenität, erreicht.

Insbesondere sind bei den hier beschriebenen elektrischen Heizvorrichtungen erhebliche Gestaltungs- und Anpassungsmöglichkeiten an die jeweilige Anwendung gegeben. Beide Begrenzungsflächen sowie Pulver und Granulat können aus demselben Werkstoff bestehen, wodurch eine besonders gleichmäßige Wärmeleitung gewährleistet ist. Es können aber auch Begrenzungsflächen aus verschiedenen Werkstoffen vorgesehen werden, beispielsweise, wenn auf der dem zu beheizenden Bauteil zugewandten Seite der elektrischen Heizvorrichtung eine besonders gute Wärmeleitfähigkeit relevant ist, aber gleichzeitig bestimmte Anforderungen an mechanische Stabilität der elektrischen Heizvorrichtung zu erfüllen sind. Dies ist insbesondere dann der Fall, wenn ein Flächenheizelement später umgeformt werden soll, wie es beispielsweise vorkommt, wenn es als Ringmanschette um ein zylindrisches zu beheizendes Bauteil gelegt werden soll und dazu verbogen wird. Ein weiter Freiheitsgrad wird hierbei dadurch geschaffen, dass auch das zur Füllung verwendete Pulver oder Granulat nach derartigen Erwägungen ausgewählt werden kann.

Die elektrische Heizvorrichtung kann in ihrer geometrischen Ausgestaltung vorteilhaft an die Geometrie des zu beheizenden Bauteils angepasst sein. Sie kann insbesondere eine Innenbohrung mit radialer Symmetrie vorsehen oder insgesamt radialsymmetrisch sein. In dieser Gestaltung ist auch möglich, konische Bauteile zu beheizen. Es kann aber auch zweckmäßig sein, dass eine zylindrische Innenbohrung vorhanden ist oder die gesamte Heizvorrichtung zylindrisch ist oder dass eine Innenbohrung oder die gesamte Heizvorrichtung eine ovale, eckige, gebogene, abgewinkelte oder elliptische Geometrie aufweist.

Ebenfalls leicht an die Erfordernisse der jeweiligen zu beheizenden Anordnung ist die Führung des rohrförmigen Heizelements aus der elektrischen Heizvorrichtung. Es kann vorteilhaft sein, wenn wenigstens ein Ende des rohrförmigen Heizelements axial, tangential oder radial aus der Heizvorrichtung herausgeführt ist.

Für die gezielte Einstellung von Temperaturprofilen auf der dem zu beheizenden Bauteil zugewandten Fläche des elektrischen Heizelementes kann man nicht nur die Formgebung des darin aufgenommenen rohrförmigen Heizelementes, insbesondere z.B. dessen Wendelung, sondern auch eine Variation der verwendeten Werkstoffe oder von deren Eigenschaften, z.B. deren Dicke, verwenden.

Je nach Anwendung kann es weiterhin vorteilhaft, das verwendete Pulver oder Granulat dadurch von Umgebungseinflüssen zu schützen, dass es auf allen Seiten von Begrenzungsflächen umgeben ist. Insbesondere kann dazu ein einstückiger oder mehrstückiger Rahmen aus Metall, Glimmer, Kunststoff oder Keramik verwendet werden, der den mit dem mindestens einem Pulver oder Granulat befüllte Raum in den Erstreckungsrichtungen der mindestens zwei Begrenzungsflächen begrenzt. Im einfachen Fall einer aus zwei Rohren gebildeten Anordnung wird dieser einfach durch zwei Scheiben oder Ringe gebildet. Es ist aber beispielsweise auch möglich, eine derartige räumliche Begrenzung durch einen Verschluss unter Verwendung einer Vergussmasse, insbesondere Silikonkautschuk, Epoxidharz oder einer keramischen Kittmasse, zu erreichen.

Weitere Vorteile ergeben sich, wenn die erste und/oder die zweite Begrenzungsfläche aus einem Fliesspressteil, insbesondere einem Fliesspressteil aus Aluminium, bestehen.

Schließlich ist für einige Anwendungen von Vorteil, wenn die elektrische Heizvorrichtung mit mehreren verschiedenen Metallpulvern, insbesondere mit in mehreren verschiedenen Metallpulvern, die in verschiedenen Kammern der elektrischen Heizvorrichtung angeordnet sind, befüllt ist. Solche Kammern können beispielsweise durch das Vorsehen von Zwischenwänden zwischen den Begrenzungsflächen erzeugt werden.

Durch Vorsehen mehrerer rohrförmiger Heizelemente lässt sich das erreichte Temperaturprofil weiter variieren. Besonders vorteilhaft ist es wenn als rohrförmiges Heizelement eine Rohrwendelpatrone, die nach dem Biegen oder Wendeln nachverdichtet, insbesondere auf einem Dorn nachverdichtet ist, Verwendung findet.

Eine besonders gute Wärmeleitung kann erreicht werden, wenn die elektrische Heizvorrichtung verdichtet wird, wobei eine innere, rohrförmige Mantelfläche beim Verdichten während des radial verkleinernden Pressvorgangs mit einem Passdorn, insbesondere mit einem zylindrischen Passdorn versehen ist.

Sind das äußere Metallrohr und das innere Metallrohr mit einer Ausnehmung versehen, die sich über die gesamte Länge des Metallrohres erstreckt, wird eine besonders kostengünstige Herstellung der elektrischen Heizvorrichtung durch Umformen oder Biegen eines Flächenheizelements möglich. Vorteilhaft ist dann, wenn das äußere Metallrohr aus einem gezogenen Metallrohr besteht bzw. wenn. das äußere Metallrohr aus einem Strangpressprofil, vorzugsweise aus einem Aluminiumstrangpressprofil besteht.

Besonders bevorzugte Abmessungen des inneren Metallrohres liegen dann vor, wenn eine Innenkontur des inneren Metallrohres kleinere Ausmaße aufweist als das zu beheizende Bauteil und damit auf dieses spannbar ist. Alternativ ist es auch hilfreich, Spannelemente auf dem äußeren Metallrohr anzuordnen, mit denen die Heizvorrichtung auf das zu beheizende Bauteil gespannt werden kann. Wenn zudem ein Mantelthermometer oder ein Thermoelement durch den Spalt geführt ist, ist der Ersatz des Thermometers in Fall seines Versagens einfach und billig möglich.

Das nachfolgend beschriebene Verfahren dient zur Herstellung einer elektrischen Heizvorrichtung zur Beheizung von Oberflächen von Bauteilen, auf die die elektrische Heizvorrichtung bei ihrer Verwendung aufgeschoben oder aufgelegt ist, also zur Herstellung von elektrischen Heizvorrichtungen, die nicht als integraler, mit dem zu beheizenden Bauteil fest verbundenes Gerät ausgelegt sind, sondern nachträglich am Gerät angeordnet bzw. vom Gerät entfernt werden können. Es weist zumindest die folgenden Schritte auf: Eine Begrenzungsfläche und ein relativ zu dieser angeordnetes rohrförmiges Heizelement werden bereitgestellt und das rohrförmige Heizelement zumindest teilweise in einem Pulver oder Granulat eingebettet. Dabei ist es gleichgültig, ob zuerst die Begrenzungsfläche, zuerst das rohrförmige Heizelement oder beide gleichzeitig bereitgestellt werden. Es ist auch möglich, dass zwischen dem Bereitstellen der Begrenzungsfläche und dem Bereitstellen des rohrförmigen Heizelements weitere Schritte durchgeführt werden, z.B. das Bereitstellen einer zweiten Begrenzungsfläche und das Verbinden der ersten und der zweiten Begrenzungsfläche. Ferner ist es möglich, dass das Pulver oder Granulat ganz oder teilweise bereits vor dem Bereitstellen des rohrförmigen Heizelements zugegeben wird.

Dass das rohrförmige Heizelement relativ zur Begrenzungsfläche angeordnet ist, bedeutet, dass es sich in einem Raumbereich oder Halbraum befindet, der durch die Begrenzungsfläche begrenzt wird.

Ferner wird das rohrförmigen Heizelements in einem Pulver oder Granulat, das nach dem Einbetten zumindest teilweise an der mindestens einen Begrenzungsfläche anliegt, eingebettet. Dies kann geschehen, wenn das Pulver oder Granulat vor den rohrförmigen Heizelement hinzugefügt wird -beispielsweise durch Eindrücken oder Vergraben des rohrförmigen Heizelements im Pulver oder Granulat-, wenn es teilweise vor dem rohrförmigen Heizelement bereitgestellt wird, oder wenn es nach dem rohrförmigen Heizelement bereitgestellt wird -beispielsweise nachträglich durch Aufschütten des Pulvers oder Granulats.

In einem weiteren Schritt erfolgt dann zumindest das Verdichten zumindest des Pulvers oder Granulats. Insbesondere ist es demzufolge auch möglich, das Pulver oder Granulat mit dem rohrförmigen Heizelement zu einer selbsttragenden Baugruppe zu verdichten und erst anschließend die Verbindung zur Begrenzungsfläche herzustellen.

Diese Vorgehensweise ermöglicht es, auf eine einfache und kostengünstige Weise ein elektrisches Heizelement zu fertigen, das gute Wärmeabfuhr garantiert und zugleich eine flexibel einsetzbare Baugruppe bildet.

In einer besonders bevorzugten Ausführungsform des Verfahrens wird diese Baugruppe gebildet, indem die Begrenzungsfläche zum Bereitstellen in einem Gesenk angeordnet wird, das Pulver oder Granulat in die Hohlräume des Gesenks hinzugefügt wird, das Heizelement in der gewünschten Weise in dem Pulver oder Granulat angeordnet wird und dann im Gesenk das Verdichten durchgeführt wird. Man erhält durch geeignete Verdichtung einen weitgehend selbsttragenden Pulverkörper mit eingebettetem rohrförmigem Heizelement, der dann auf die zu beheizenden Bauteile aufgeschoben und -ggf. durch weiteres Verdichten, z. B. durch Hämmern- in guten thermischen Kontakt zu ihnen gebracht werden kann. Natürlich können mittels der beschriebenen Verwendung eines Gesenks auch elektrische Heizvorrichtungen hergestellt werden, die mehr als eine Begrenzungsfläche aufweisen.

In einer zweiten besonders bevorzugten Ausgestaltung des Verfahrens, die sich besonders gut zur Herstellung von elektrischen Heizelementen für zylinderförmige Bauteile eignet, wird zum Bereitstellen der mindestens einen Begrenzungsfläche ein inneres Metallrohr in ein äußeres Metallrohr eingeführt und eine Bodenscheibe mit dem innerem und dem äußeren Metallrohr verbunden. Zum Bereitstellen des rohrförmigen Heizelements wird das rohrförmigen Heizelement zwischen innerem Metallrohr und äußerem Metallrohr eingeführt. Zum zumindest teilweisen Einbetten des rohrförmigen Heizelements in einem Pulver oder Granulat wird dann das Volumen zwischen innerem Metallrohr und äußerem Metallrohr, vorzugsweise unter Rütteln, mit dem Pulver oder Granulat befüllt wird.

Die Erfindung wird im Folgenden anhand von Zeichnungen näher erläutert. Es zeigen:
- Fig.1a:: Die Ansicht einer elektrischen Heizvorrichtung von schräg oben gesehen,
- Fig.1b:: Eine Schnittdarstellung der elektrischen Heizvorrichtung aus Fig.1a, geschnitten entlang der Linie B-B',
- Fig.1c:: Eine Explosionsdarstellung der elektrischen Heizvorrichtung aus Figur 1a unter Vernachlässigung des Pulvers oder Granulats,
- Fig.2a:: Ein Ausführungsbeispiel der Erfindung in einer Ausgestaltung mit durchgehender Ausnehmung in axialer Richtung,
- Fig.2b:: Die elektrische Heizvorrichtung nach Figur 1a mit einer ersten Variation des Anschlusses des rohrförmigen Heizelementes,
- Fig.2c:: Die elektrische Heizvorrichtung nach Figur 1a mit einer zweiten Variation des Anschlusses des rohrförmigen Heizelementes,
- Fig.2d:: Eine elektrische Heizvorrichtung mit einem gewendelten rohrförmigen Heizelement,
- Fig.2e:: Eine Schnittdarstellung der elektrischen Heizvorrichtung aus Figur 2d, geschnitten längs der Linie B-B',
- Fig.2f:: Die elektrische Heizvorrichtung nach Figur 2d mit einer Variation des Anschlusses des rohrförmigen Heizelements,
- Fig.2g:: Eine elektrische Heizvorrichtung der Erfindung mit einem gewendelten rohrförmigen Heizelement und einem die Wendelung begleitend geführten Thermoelement,
- Fig.2h:: Eine Schnittdarstellung der elektrischen Heizvorrichtung aus Figur 2g, geschnitten längs der Linie B-B',
- Fig.2i:: Eine elektrische Heizvorrichtung mit zwei gewendelten rohrförmigen Heizelementen und einem die Wendelung begleitend geführten Thermoelement,
- Fig.2k:: Eine Schnittdarstellung der elektrischen Heizvorrichtung aus Figur 2i, geschnitten längs der Linie B-B',
- Fig.3a-g:: Unterschiedliche Möglichkeiten der Einbettung des rohrförmigen Heizelementes,
- Fig.4a:: Eine Schnittdarstellung eines weiteren Ausführungsbeispiels der Erfindung, entsprechend einem Schnitt entlang der in Figur 1a dargestellten Linie A-A',
- Fig.4b:: Eine Schnittdarstellung eines weiteren Ausführungsbeispiels der Erfindung, entsprechend einem Schnitt entlang der in Figur 1a dargestellten Linie A-A',
- Fig.5:: Die Ansicht einer elektrischen Heizvorrichtung von schräg oben gesehen,
- Fig.6:: Eine Schnittdarstellung der elektrischen Heizvorrichtung aus Fig.5, geschnitten entlang der Linie A-A'
- Fig.7:: Eine Detailvergrößerung des rohrförmigen Heizelements
- Fig.8:: Eine Schnittdarstellung der elektrischen Heizvorrichtung aus Fig.5, geschnitten entlang der Linie B-B'
- Fig.9:: Die Ansicht aus Figur 6 auf eine nach Verdichten des Flächenheizelementes zu einem nahezu geschlossenen Ringkörper umgeformte elektrische Heizvorrichtung gemäß Fig.5

In allen Figuren werden identische Bezugszeichen für gleiche Bauelemente gleicher Ausführungsbeispiele verwendet.

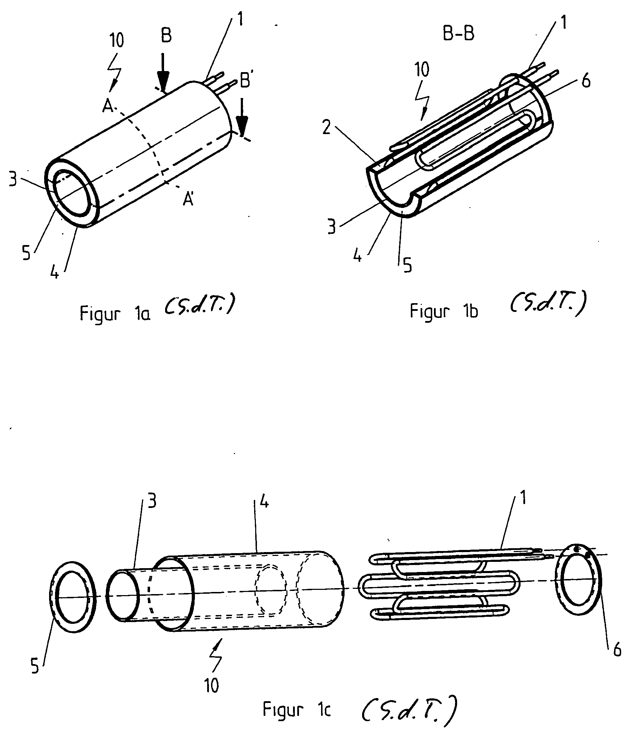

Fig.1a zeigt die Ansicht einer elektrischen Heizvorrichtung von schräg oben gesehen. Die elektrische Heizvorrichtung 10 weist ein inneres Metallrohr 3 und ein äußeres Metallrohr 4 auf, die konzentrisch ineinander liegend angeordnet und gleich lang sind. Ferner sieht man die Enden eines rohrförmigen Heizelements 1, das, wie in Figuren 1b und 1c deutlicher zu erkennen ist, mäanderförmig im durch das innere Metallrohr 3 und das äußere Metallrohr 4 gebildeten Raum angeordnet ist. Ferner ist in Figur 1a eine ringförmige optionale Bodenscheibe 5 vorgesehen, die z.B. aus Metall, Glimmer, Kunststoff oder Keramik bestehen kann. Alternativ kann ein Abschluss des Raumes zwischen dem inneren Metallrohr 3 und dem äußeren Metallrohr 4 durch eine Vergussmasse, z.B. mit einem Silikonkautschuk, einem Epoxidharz oder einer keramischen Kittmasse erfolgen. Ein geeignet verdichtetes Pulver oder Granulat 2 kann aber, insbesondere wenn während des Verdichtens das Volumen temporär, z.B. durch die Wandung eines Gesenks, geschlossen gehalten wird, auch selbsttragend sein, so dass bei der fertigen elektrischen Heizvorrichtung 10 kein Abschluss des Raumes zwischen innerem Metallrohr 3 und äußerem Metallrohr 4 mehr notwendig ist.

Fig.1b zeigt eine Schnittdarstellung der elektrischen Heizvorrichtung aus Fig.1a, geschnitten entlang der Linie B-B'. Neben dem bereit beschriebenen mäandrierenden Verlauf des rohrförmigen Heizelements 1 erkennt man in dieser Darstellung vor allem gut die Einbettung des rohrförmigen Heizelements 1 in dem Pulver oder Granulat 2. Ferner erkennt man eine ringförmige anschlussseitige Endscheibe 6, durch die hindurch das rohrförmige Heizelement 1 in den bzw. aus dem Raum zwischen dem inneren Metallrohr 3 und dem äußeren Metallrohr 4 geführt ist. Auch die Endscheibe 6 ist aus den bereits oben dargestellten Gründen optional, sie kann aus denselben Materialien wie die Bodenscheibe bestehen.

Fig.1c zeigt eine Explosionsdarstellung der elektrischen Heizvorrichtung 10 aus Figur 1a unter Vernachlässigung des nicht dargestellten Pulvers oder Granulats 2. Anhand dieser Figur lässt sich gut eine mögliche Vorgehensweise zur Herstellung der elektrischen Heizvorrichtung 10 erläutern: Das innere Metallrohr 3 wird in das äußere Metallrohr 4 eingeführt. Die Bodenscheibe 5 wird mit beiden Metallrohren verbunden, z.B. verklebt oder verschweißt. Das rohrförmige Heizelement 1 wird zwischen innerem Metallrohr 3 und äußerem Metallrohr 5 eingeführt. Dann wird das Volumen zwischen diesen Rohren, vorzugsweise unter Rütteln, mit dem Pulver oder Granulat 2 befüllt und die anschlussseitige Endscheiben 6 aufgesetzt und mit innerem Metallrohr 3 und äußerem Metallrohr 4 verbunden. Anschließend kann die gesamte Anordnung verdichtet werden.

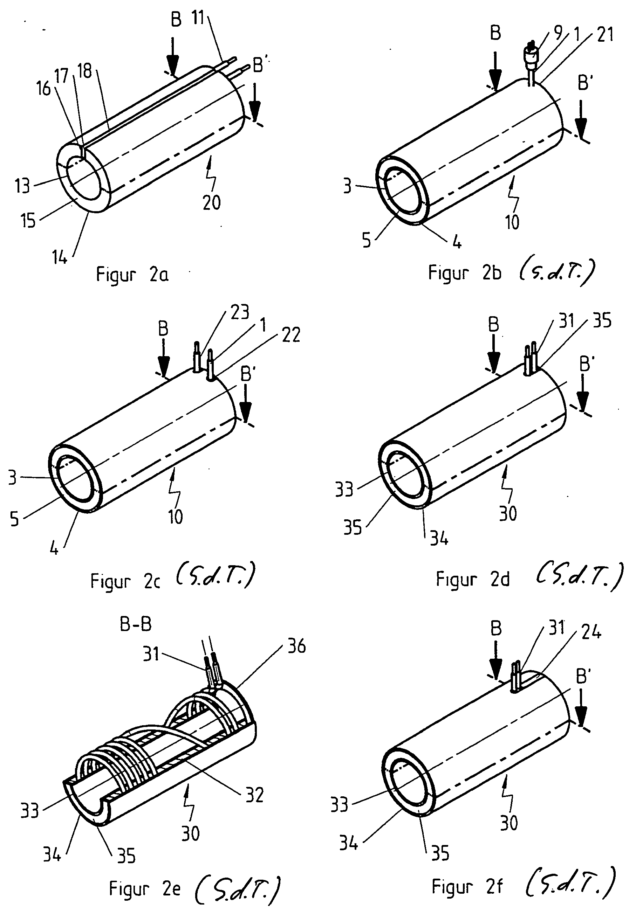

Figur 2a zeigt ein Ausführungsbeispiel der Erfindung in einer Ausgestaltung mit durchgehender Ausnehmung in axialer Richtung. Die elektrische Heizvorrichtung 20 weist ein inneres Metallrohr 13 und ein äußeres Metallrohr 14 auf, die konzentrisch ineinanderliegend angeordnet und gleich lang sind. Hier werden allerdings sowohl das innere Metallrohr 13 als auch das äußere Metallrohr 14 durch einen die beiden Metallrohre 13,14 entlang ihrer gesamten axialen Erstreckung durchsetzende Ausnehmung 18 durchsetzt. Ferner sind das innere Metallrohr 53 und das äußere Metallrohr 54 an den in axialer Richtung orientierten Rändern der Ausnehmung 58 miteinander durch Abschlussflächen 16,17 miteinander verbunden.

Ferner sieht man die Enden eines rohrförmigen Heizelements 11, das hier nicht dargestellt, genau wie beim ersten Ausführungsbeispiel mäanderförmig im durch das innere Metallrohr 13 und das äußere Metallrohr 14 gebildeten Raum angeordnet ist. Ferner ist in Figur 2a wieder eine optionale, ebenfalls geschlitzte Bodenscheibe 15 vorgesehen, die z.B. aus Metall, Glimmer, Kunststoff oder Keramik bestehen kann. Ebenfalls nicht dargestellt ist die Einbettung des rohrförmigen Heizelements 11 in das Pulver oder Granulat. Die Ausführungsform gemäß Figur 2a kann insbesondere durch Umformung eines Flächenheizelements hergestellt werden, was eine besonders günstige Herstellungsmethode ist.

Die Figuren 2b und 2c zeigen weitere Möglichkeiten für den Anschluss des rohrförmigen Heizelements 1 der elektrischen Heizvorrichtung nach Figur 1a. In Figur 2b ist ein Anschlussstecker 9 vorgesehen, der das durch die Ausnehmung 21 radial aus dem Raum zwischen dem inneren Metallrohr 3 und dem äußeren Metallrohr 4 hinausgeführte rohrförmige Heizelement kontaktierbar macht. Figur 2c zeigt ebenfalls eine radiale Führung des rohrförmigen Heizelements 1 durch zwei Ausnehmungen 22,23.

Figuren 2d bis 2f zeigen zwei Varianten einer elektrischen Heizvorrichtung der Erfindung, die insbesondere, wie Figur 2e zu entnehmen ist, ein gewendeltes rohrförmiges Heizelement 31 aufweist.

Fig.2d zeigt die Ansicht der elektrischen Heizvorrichtung von schräg oben gesehen. Die elektrische Heizvorrichtung 30 weist ein inneres Metallrohr 33 und ein äußeres Metallrohr 34 auf, die konzentrisch ineinanderliegend angeordnet und gleich lang sind. Ferner sieht man die Enden eines rohrförmigen Heizelements 31, das, wie in Figuren 2e deutlicher zu erkennen ist, gewendelt im durch das innere Metallrohr 33 und das äußere Metallrohr 34 gebildeten Raum angeordnet ist. Ferner ist in Figur 2d wieder eine optionale Bodenscheibe 35 vorgesehen. Das äußere Metallrohr 34 weist eine längliche Ausnehmung 35 auf, durch die hindurch das rohrförmige Heizelement 31 in den bzw. aus dem Raum zwischen dem inneren Metallrohr 33 und dem äußeren Metallrohr 34 geführt ist.

Fig.2e zeigt eine Schnittdarstellung des Ausführungsbeispiels aus Fig.2d, geschnitten entlang der Linie B-B'. Neben dem bereit beschriebenen gewendelten Verlauf des rohrförmigen Heizelements 31 erkennt man in dieser Darstellung vor allem gut die Einbettung des rohrförmigen Heizelements 31 in dem Pulver oder Granulat 32. Ferner erkennt man eine optionale anschlussseitige Endscheibe 36.

In der in Figur 2f gezeigten Variante des Ausführungsbeispiels aus Figur 2d ist das rohrförmige Heizelement 31 näher an der Mitte der Längserstreckung des äußeren Metallrohrs 33 durch dessen Wandung geführt. Dies geschieht durch eine längliche Ausnehmung, die dann mit dem Deckplättchen 24 verschlossen ist und aus diesem Grund in Figur 2f nicht erkennbar ist.

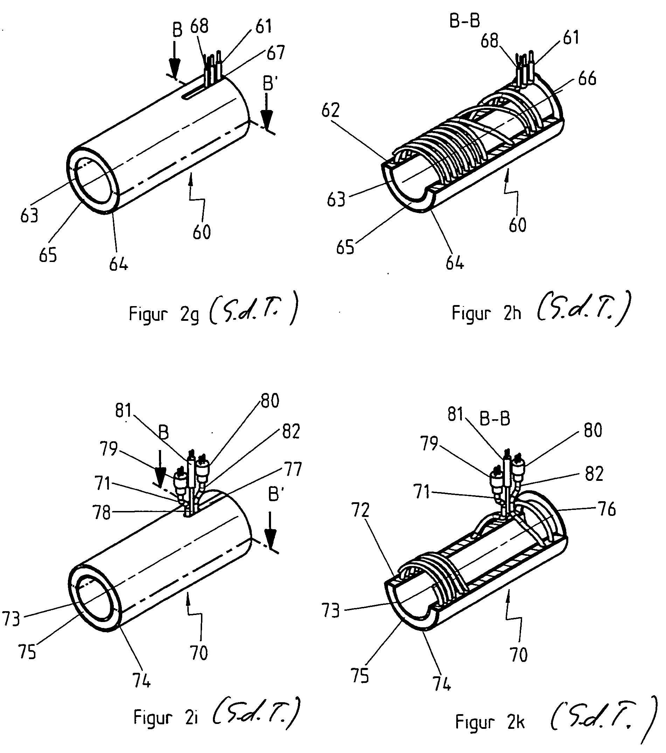

Fig.2g zeigt die Ansicht einer elektrischen Heizvorrichtung von schräg oben gesehen. Die elektrische Heizvorrichtung 60 weist ein inneres Metallrohr 63 und ein äußeres Metallrohr 64 auf, die konzentrisch ineinanderliegend angeordnet und gleich lang sind. Ferner sieht man die Enden eines rohrförmigen Heizelements 61, das, wie in Figuren 2e deutlicher zu erkennen ist, gewendelt im durch das innere Metallrohr 63 und das äußere Metallrohr 64 gebildeten Raum angeordnet ist. Ebenfalls gewendelt verläuft ferner ein Thermoelement 68. Ferner ist in Figur 2g wieder eine optionale Bodenscheibe 65 vorgesehen. Das äußere Metallrohr 64 weist eine längliche Ausnehmung 67 auf, durch die hindurch das rohrförmige Heizelement 61 und das Thermoelement 68 in den bzw. aus dem Raum zwischen dem inneren Metallrohr 63 und dem äußeren Metallrohr 64 geführt sind.

Fig.2h zeigt eine Schnittdarstellung der elektrischen Heizvorrichtung aus Fig.2g, geschnitten entlang der Linie B-B'. Neben dem bereit beschriebenen gewendelten Verlauf des rohrförmigen Heizelements 61 und des Thermoelements 68 erkennt man in dieser Darstellung vor allem gut die Einbettung des rohrförmigen Heizelements 61 in dem Pulver oder Granulat 62. Ferner erkennt man eine optionale anschlussseitige Endscheibe 66.

Fig.2i zeigt die Ansicht einer elektrischen Heizvorrichtung von schräg oben gesehen. Die elektrische Heizvorrichtung 70 weist ein inneres Metallrohr 73 und ein äußeres Metallrohr 74 auf, die konzentrisch ineinanderliegend angeordnet und gleich lang sind. Ferner sieht man die Enden eines ersten rohrförmigen Heizelements 71, und eines zweiten rohrförmigen Heizelements 82, die mit Anschlusssteckern 79 und 80 versehen sind, sowie das mit dem Anschlussstecker 81 versehene Ende eines Thermoelementes 78. Die rohrförmigen Heizelemente 71,82 und das Thermoelement 78 sind, wie in Figuren 2k deutlicher zu erkennen ist, gewendelt im durch das innere Metallrohr 73 und das äußere Metallrohr 74 gebildeten Raum angeordnet ist. Ferner ist auch in Figur 2i eine optionale Bodenscheibe 75 vorgesehen. Das äußere Metallrohr 74 weist eine längliche Ausnehmung 77 auf, durch die hindurch die rohrförmigen Heizelemente 71, 82 und das Thermoelement 81 in den bzw. aus dem Raum zwischen dem inneren Metallrohr 73 und dem äußeren Metallrohr 74 geführt sind.

Fig.2h zeigt eine Schnittdarstellung der elektrischen Heizvorrichtung aus Fig.2g, geschnitten entlang der Linie B-B'. Neben dem bereit beschriebenen gewendelten Verlauf der rohrförmigen Heizelemente 71, 82 und des Thermoelements 78 erkennt man in dieser Darstellung vor allem gut die Einbettung der rohrförmigen Heizelemente 71,82 in dem Pulver oder Granulat 72. Ferner erkennt man eine optionale anschlussseitige Endscheibe 76.

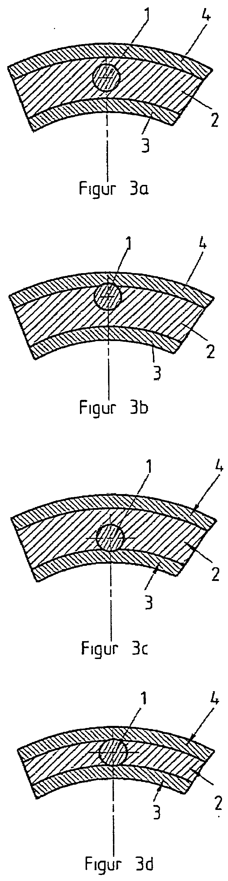

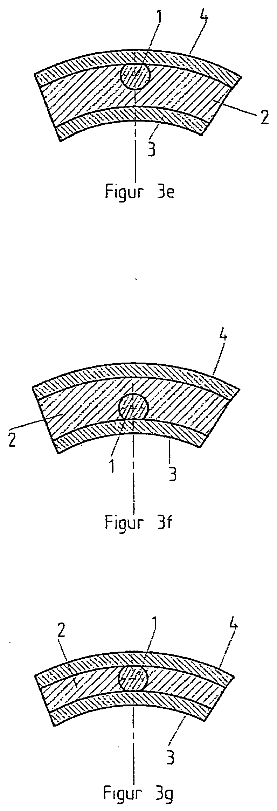

Die Figuren 3a bis 3g stellen anhand der elektrischen Heizvorrichtung aus Figur 1a noch einmal schematisch die unterschiedlichen Möglichkeiten der Einbettung des rohrförmigen Heizelements 1 in das Pulver oder Granulat 2 im Sinne der Erfindung dar: Das Heizelement 1 ist stets vollständig entweder von Pulver oder Granulat 2 oder Pulver oder Granulat 2 sowie innerem Metallrohr 3 und/oder äußerem Metallrohr 4 umgeben. In Figur 3b und 3e hat es direkten Kontakt zum äußeren Metallrohr 4, in Figur 3c und 3f direkten Kontakt zum inneren Metallrohr 3 und in Figur 3d und 3g direkten Kontakt zum inneren Metallrohr 3 und zum äußeren Metallrohr 4. In Figur 3a ist das rohrförmige Heizelement 1 nur von Pulver oder Granulat 2 umgeben.

Wie aus dem Vergleich der Figuren 3b und 3e, 3c und 3f sowie 3d und 3g direkt hervorgeht, kann, wenn ein Kontakt zwischen dem rohrförmigen Heizelement 1 und dem inneren Metallrohr 3 und/oder dem äußeren Metallrohr 4 vorliegt, dieser durch ein abschnittsweises flächiges Anliegen des rohrförmigen Heizelements 1 an dem unveränderten Profil des jeweiligen Metallrohrs 3,4, aber auch durch eine abschnittsweise partielle Einbettung des rohrförmigen Heizelements 1 im jeweiligen Metallrohr 3,4 hergestellt sein. Die dargestellten Varianten stellen dabei zwei Extreme dar, Zwischenformen sind ebenfalls denkbar. Insbesondere ist auch ein punkt- bzw. linienförmiger Kontakt zwischen rohrförmigem Heizelement 1 und dem inneren Metallrohr 3 und/oder dem äußeren Metallrohr 4 denkbar.

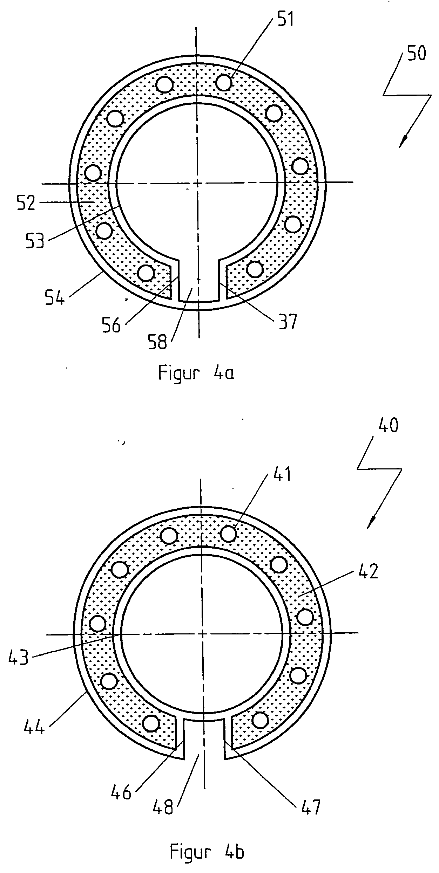

Figur 4a zeigt eine Schnittdarstellung eines Ausführungsbeispiels der Erfindung, entsprechend einem Schnitt durch den zylindrischen Körper der elektrischen Heizvorrichtung entlang der in Figur 1a dargestellten Linie A-A'. Die elektrische Heizvorrichtung 50 verfügt ebenfalls über ein sie mäanderförmig durchsetzendes rohrförmiges Heizelement 51, das zwischen dem inneren Metallrohr 53 und dem äußeren Metallrohr 54 angeordnet ist. Diese Ausführungsform zeichnet sich dadurch aus, dass das innere Metallrohr 53 von einer sich über die gesamte axiale Erstreckung und somit die ganze Länge des Metallrohrs hinziehenden Ausnehmung 58 durchsetzt ist. Im dargestellten Beispiel sind erfindungsgemäß Abschlussflächen 56 und 57 vorgesehen, die das innere Metallrohr 53 und das äußere Metallrohr 54 an den in axialer Richtung orientierten Rändern der Ausnehmung 58 miteinander verbinden. Die entstehende Kammer ist mit Pulver oder Granulat 52 gefüllt, in das das rohrförmige Heizelement 51 eingebettet ist. Diese Ausführungsform ist besonders nützlich, wenn eine radial asymmetrische Beheizung des zu beheizenden Bauteils notwendig ist, da durch einen auf diesem vorgesehenen Grat leicht eine Sollorientierung dieser Ausführungsform vorgegeben werden kann.

Figur 4b zeigt eine Schnittdarstellung eines weiteren Ausführungsbeispiels der Erfindung, entsprechend einem Schnitt durch den zylindrischen Körper der elektrischen Heizvorrichtung entlang der in Figur 1a dargestellten Linie A-A'. Die elektrische Heizvorrichtung 40 verfügt ebenfalls über ein sie mäanderförmig durchsetzendes rohrförmiges Heizelement 41, das zwischen dem inneren Metallrohr 43 und dem äußeren Metallrohr 44 angeordnet ist. Diese Ausführungsform zeichnet sich dadurch aus, dass das äußere Metallrohr 44 von einer sich über die gesamte axiale Erstreckung und somit die ganze Länge des Metallrohrs hinziehenden Ausnehmung 48 durchsetzt ist. Im dargestellten Beispiel sind erfindungsgemäß Abschlussflächen 46 und 47 vorgesehen, die das innere Metallrohr 43 und das äußere Metallrohr 44 an den in axialer Richtung orientierten Rändern der Ausnehmung 48 miteinander verbinden. Die entstehende Kammer ist mit Pulver oder Granulat 52 gefüllt, in das das rohrförmige Heizelement 41 eingebettet ist. Diese Ausführungsform ist besonders nützlich, wenn eine verdeckte Führung von Kabeln oder Versorgungsleitungen gewünscht ist.

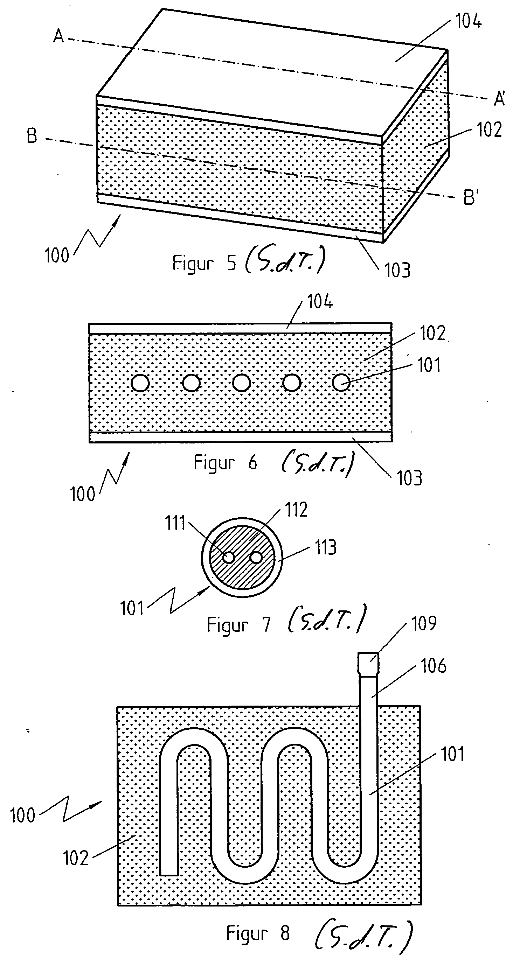

Figur 5 zeigt eine elektrische Heizvorrichtung 100 in einer Ausgestaltung als Flächenheizelement mit einer ersten Metallplatte 103 und einer zweiten Metallplatte 104 als Begrenzungsflächen. Im Raum zwischen der ersten Metallplatte 103 und der zweiten Metallplatte 104 ist, wie z.B. in Figur 6 zu erkennen, ein rohrförmiges Heizelement 101 angeordnet, das aber in Figur 5 nicht zu erkennen ist, da, wie in Figur 8 deutlich wird, nur sein Anschlussbereich 106 mit Anschlussstecker 109 aus der elektrischen Heizvorrichtung 100 herausragt und dieser auf der dem Betrachter abgewandten Seite liegt. Das rohrförmige Heizelement 101 ist in ein Pulver oder Granulat 102 eingebettet, das den Raum zwischen der ersten Metallplatte 103 und der zweiten Metallplatte 104 füllt. In der hier dargestellten Ausführungsform ist kein Rahmen vorgesehen; wenn das Pulver oder Granulat 102 verdichtet ist, wird dieser nicht benötigt, um das Material an seinem Platz zu halten.

In der Darstellung der Figur 6 ist darüber hinaus das in das Pulver oder Granulat 102 eingebettete rohrförmige Heizelement 101 zu erkennen, das, wie aus Figur 8 klarer hervorgeht, in Windungen durch die elektrische Heizvorrichtung 100 verläuft.

Figur 7 zeigt einen vergrößerten Schnitt durch das rohrförmige Heizelement 101, anhand dessen ein typischer Aufbau des rohrförmigen Heizelements 101 nachvollzogen werden kann. Das rohrförmige Heizelement 101, das in dieser Ausgestaltung nicht nur bei Flächenheizelementen, sondern auch in allen anderen elektrischen Heizvorrichtungen eingesetzt werden kann und bevorzugt eingesetzt wird, weist einen Heizleiter 111 auf, der in einen von einem rohrförmigen Stahlmantel 113 umschlossenen, zentralen Magnesiumoxidkern 112 eingebettet ist. Grundsätzlich sind auch andere Materialien für den Mantel und den elektrisch isolierenden Kern denkbar.

In der Darstellung der Figur 8 erkennt man weiter, dass das rohrförmige Heizelement 101 in diesem Fall mit seinem vom Anschlussstecker 109 terminierten Anschlussbereich 106 tangential aus der elektrischen Heizvorrichtung 100 hervortritt. Grundsätzlich ist auch eine andere, beispielsweise eine normale Führung des Anschlussbereichs 106 aus der elektrischen Heizvorrichtung 100 möglich.

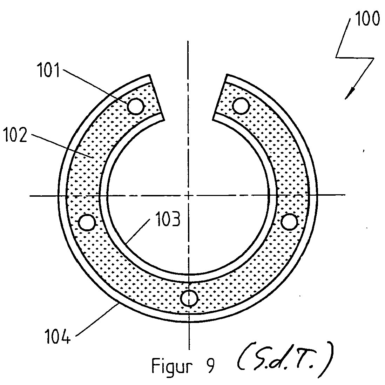

Anhand der Figur 9 wird deutlich, dass eine als Flächenheizelement ausgestaltete erfindungsgemäße elektrisches Heizvorrichtung 100 durch Umformung leicht an andere gewünschte Formen, hier einen nahezu geschlossenen Ringkörper, der zum Beispiel für das Beheizen eines zylindrischen Bauteils Verwendung finden kann, angepasst werden kann. Gerade durch die Vielfalt der möglichen Materialkombinationen für Pulver oder Granulat 2, erste Begrenzungsfläche und zweite Begrenzungsfläche lässt sich unter anderem eine derartige Umformbarkeit mit der erfindungsgemäßen elektrischen Heizvorrichtung 100 besonders gut einstellen. Allerdings ist, wenn eine Umformung beabsichtigt ist empfehlenswert, einen Rahmen vorzusehen, der mit der ersten Metallplatte 103 und der zweiten Metallplatte 104 fest verbunden ist.

### Bezugszeichenliste

- 1,11,31,41,51,61,71,82,101: rohrförmiges Heizelement
- 2,32,42,52,62,72,102: Pulver oder Granulat
- 3,13,33,43,53,63,73: inneres Metallrohr
- 103: erste Metallplatte
- 4,14,34,44,54,64,74: äußeres Metallrohr
- 104: zweite Metallplatte
- 5,15,35,65,75: Bodenscheibe
- 6,36,66,76: anschlussseitige Endscheibe
- 106: Anschlussbereich
- 9,79,80,81,109: Anschlussstecker
- 10,30,40,50,60,70,100: elektrische Heizvorrichtung
- 16,17,46,47,56,57: Abschlussfläche
- 18,21,22,23,48,58,67,77: Ausnehmung
- 68,78: Thermoelement
- 24: Deckplättchen
- 111: Heizleiter
- 112: Magnesiumoxidkern
- 113: Stahlmantel

## Patentansprüche

1. Elektrische Heizvorrichtung (10,30,40,50,60,70,100) zur Beheizung von Oberflächen von Bauteilen, auf die die elektrische Heizvorrichtung (10,30,40,50,60, 70,100) aufgeschoben oder aufgelegt ist, mit wenigstens einem rohrförmigen Heizelement (1,11,31,41,51,61,71,82, 101), das einen Metallmantel aufweist, und mit mindestens einer Begrenzungsfläche, wobei mindestens eine zweite Begrenzungsfläche aus Metall vorhanden ist, wobei das rohrförmige Heizelement (1,11,31, 41,51,61,71,82,101) zwischen der ersten und der zweiten Begrenzungsfläche aus Metall angeordnet ist und wobei der Raum zwischen den Begrenzungsflächen aus Metall, in dem das rohrförmige Heizelement (1,11,31,41,51,61,71,82,101) angeordnet ist, mit einem Pulver oder Granulat (2,32,42,52,62,72,102) befüllt ist, so dass das rohrförmige Heizelement (1,11,31,41,51,61,71,82,101) zumindest teilweise in mindestens einem Pulver oder Granulat (2,32,42,52,62,72,102) eingebettet ist, wobei das Pulver oder Granulat (2,32,42,52,62,72,102) zumindest an Teilen der mindestens einen Begrenzungsfläche anliegt, wobei die mindestens zwei Begrenzungsflächen aus Metall durch Wandungen eines äußeren Metallrohres (4,14,34,44,54,64, 74) und eines in dem äußeren Metallrohr (4,14,34,44,54, 64,74) angeordneten inneren Metallrohres (3,13,33,43,53, 63,73) gebildet werden,
**dadurch gekennzeichnet, dass** das äußere Metallrohr (4,14,34,44,54,64,74) und/oder das innere Metallrohr (3,13,33,43,53,63,73) eine sich in axialer Richtung erstreckende Ausnehmung (18,21,22,23,48, 58,67,77) aufweisen und dass die mindestens zwei Begrenzungsflächen durch mindestens eine weitere Begrenzungsfläche fest miteinander verbunden sind.

2. Elektrische Heizvorrichtung (10,30,40,50,60,70,100) nach Anspruch 1,
**dadurch gekennzeichnet, dass** eine Innenbohrung oder die gesamte elektrische Heizvorrichtung (10,30,40,50,60,70,100)eine ovale, eckige, gebogene, abgewinkelte oder elliptische Geometrie aufweist.

3. Elektrische Heizvorrichtung (10,30,40,50,60,70,100) nach einem der vorstehenden Ansprüche,
**dadurch gekennzeichnet, dass** die mindestens zwei Begrenzungsflächen aus Metall aus verschiedenen Blech- und Rohrsegmenten aus gleichen oder unterschiedlichen Werkstoffen zusammengefügt sind.

4. Elektrische Heizvorrichtung (10,30,40,50,60,70,100) nach einem der vorstehenden Ansprüche,
**dadurch gekennzeichnet, dass**
an einem oder beiden Enden rohrförmiger Begrenzungsflächen aus Metall Scheiben oder Ringe aus Metall, Glimmer, Kunststoff oder Keramik angeordnet sind.

5. Elektrische Heizvorrichtung (10,30,40,50,60,70,100) nach einem der vorstehenden Ansprüche,
**dadurch gekennzeichnet, dass** ein oder beide Enden rohrförmiger Begrenzungsflächen aus Metall mit einer Vergussmasse, insbesondere Silikonkautschuk, Epoxidharz oder einer keramischen Kittmasse verschlossen sind.

6. Elektrische Heizvorrichtung (10,30,40,50,60,70,100) nach einem der vorstehenden Ansprüche,
**dadurch gekennzeichnet, dass** die elektrische Heizvorrichtung (10,30,40,50,60,70,100) mit mehreren verschiedenen Metallpulvern, insbesondere mit in mehreren verschiedenen Metallpulvern, die in verschiedenen Kammern der elektrischen Heizvorrichtung (10,30,40,50,60,70,100) angeordnet sind, befüllt ist.

7. Elektrische Heizvorrichtung (10,30,40,50,60,70,100) nach Anspruch 6,
**dadurch gekennzeichnet, dass** das äußere Metallrohr (4,14,34,44,54,64,74) und das innere Metallrohr (3,13,33,43,53,63,73) eine Ausnehmung (18,21,22,23,48,58,67,77) aufweisen, die sich über ihre gesamte Länge erstreckt.

8. Elektrische Heizvorrichtung (10,30,40,50,60,70,100) nach Anspruch 7,
**dadurch gekennzeichnet, dass** ein Mantelthermometer oder Thermoelement (68,78) durch die Ausnehmung (18,21,22,23, 48,58,67,77) geführt ist.

## Claims

1. Electric heating device (10, 30, 40, 50, 60, 70, 100) for heating surfaces of components onto which the electric heating device (10, 30, 40, 50, 60, 70, 100) is pushed or placed, comprising at least one tubular heating element (1, 11, 31, 41, 51, 61, 71, 82, 101) which has a metal sheath, and comprising at least one boundary face, wherein at least one second boundary face made of metal is present, wherein the tubular heating element (1, 11, 31, 41, 51, 61, 71, 82, 101) is arranged between the first and the second boundary face made of metal, and wherein the space between the boundary faces made of metal, in which the tubular heating element (1, 11, 31, 41, 51, 61, 71, 82, 101) is arranged, is filled with a powder or granular material (2, 32, 42, 52, 62, 72, 102) so that the tubular heating element (1, 11, 31, 41, 51, 61, 71, 82, 101) is embedded at least partially in at least one powder or granular material (2, 32, 42, 52, 62, 72, 102), wherein the powder or granular material (2, 32, 42, 52, 62, 72, 102) bears at least against parts of the at least one boundary face, wherein the at least two boundary faces made of metal are formed by walls of an outer metal pipe (4, 14, 34, 44, 54, 64, 74) and of an inner metal pipe (3, 13, 33, 43, 53, 63, 73) arranged in the outer metal pipe (4, 14, 34, 44, 54, 64, 74), **characterized in that** the outer metal pipe (4, 14, 34, 44, 54, 64, 74) and/or the inner metal pipe (3, 13, 33, 43, 53, 63, 73) have a cutout (18, 21, 22, 23, 48, 58, 67, 77) extending in the axial direction, and **in that** the at least two boundary faces are fixedly connected to one another by at least one further boundary face.

2. Electric heating device (10, 30, 40, 50, 60, 70, 100) according to claim 1, **characterized in that** an internal bore or the entire electric heating device (10, 30, 40, 50, 60, 70, 100) has an oval, square, curved, angled or elliptical geometry.

3. Electric heating device (10, 30, 40, 50, 60, 70, 100) according to any one of the preceding claims, **characterized in that** the at least two boundary faces made of metal are joined together from different sheet metal or pipe segments made of identical or different materials.

4. Electric heating device (10, 30, 40, 50, 60, 70, 100) according to any one of the preceding claims, **characterized in that** discs or rings made of metal, mica, plastic or ceramic are arranged at one or both ends of tubular boundary faces made of metal.

5. Electric heating device (10, 30, 40, 50, 60, 70, 100) according to any one of the preceding claims, **characterized in that** one or both ends of tubular boundary faces made of metal are closed by a sealing compound, in particular silicone rubber, epoxy resin or a ceramic putty compound.

6. Electric heating device (10, 30, 40, 50, 60, 70, 100) according to any one of the preceding claims, **characterized in that** the electric heating device (10, 30, 40, 50, 60, 70, 100) is filled with a plurality of different metal powders, in particular with a plurality of different metal powders which are arranged in different chambers of the electric heating device (10, 30, 40, 50, 60, 70, 100).

7. Electric heating device (10, 30, 40, 50, 60, 70, 100) according to claim 6, **characterized in that** the outer metal pipe (4, 14, 34, 44, 54, 64, 74) and the inner metal pipe (3, 13, 33, 43, 53, 63, 73) have a cutout (18, 21, 22, 23, 48, 58, 67, 77) which extends along the entire length thereof.

8. Electric heating device (10, 30, 40, 50, 60, 70, 100) according to claim 7, **characterized in that** a sheathed thermometer or thermocouple (68, 78) is guided through the cutout (18, 21, 22, 23, 48, 58, 67, 77).

## Revendications

1. Dispositif de chauffage électrique (10, 30, 40, 50, 60, 70, 100) destiné à permettre le chauffage de surfaces d'éléments sur lesquelles est appliqué ou monté le dispositif de chauffage électrique (10, 30, 40, 50, 60, 70, 100), comprenant au moins un élément de chauffage tubulaire (1, 11, 31, 41, 51, 61, 71, 82, 101) qui est muni d'une enveloppe métallique et au moins une surface de limitation, au moins une seconde surface de limitation en métal étant prévue, l'élément de chauffage tubulaire (1, 11, 31, 41, 51, 61, 71, 82, 101) étant positionné entre la première surface de limitation et la seconde surface de limitation en métal, et l'espace compris entre les surfaces de limitation en métal dans laquelle est positionné l'élément de chauffage tubulaire (1, 11, 31, 41, 51, 61, 71, 82, 101) est rempli d'une poudre ou de granulés (2, 32, 42, 52, 62, 72, 102) de sorte que l'élément de chauffage tubulaire (1, 11, 31, 41, 51, 61, 71, 82, 101) soit noyé au moins partiellement dans au moins une poudre ou de granulés (2, 32, 42, 52, 62, 72, 102), la poudre ou les granulés (2, 32, 42, 52, 62, 72, 102) s'appliquant au moins sur des parties d'une surface de limitation, les surfaces de limitation en métal étant formées par des parois d'un tube métallique externe (4, 14, 34, 44, 54, 64, 74) et d'un tube métallique interne (3, 13, 33, 43, 53, 63, 73) situé dans le tube métallique externe (4, 14, 34, 44, 54, 64, 74), **caractérisé en ce que**
le tube métallique externe (4, 14, 34, 44, 54, 64, 74) et/ou le tube métallique interne (3, 13, 33, 43, 53, 63, 73) comporte(nt) un évidement (18, 21, 22, 23, 48, 58, 67, 77) s'étendant en direction axiale, et les deux surfaces de limitation sont reliées solidairement l'une à l'autre par au moins une autre surface de limitation.

2. Dispositif de chauffage électrique (10, 30, 40, 50, 60, 70, 100), conforme à la revendication 1,
**caractérisé en ce qu'**
un perçage interne ou la totalité du dispositif de chauffage électrique (10, 30, 40, 50, 60, 70, 100) a une géométrie ovale, angulaire, courbe, coudée ou elliptique.

3. Dispositif de chauffage électrique (10, 30, 40, 50, 60, 70, 100), conforme à l'une des revendications précédentes,
**caractérisé en ce que**
les deux surfaces de limitation en métal sont constituées par l'assemblage de différents segments de tôle ou de tubes en un même matériau ou en des matériaux différents.

4. Dispositif de chauffage électrique (10, 30, 40, 50, 60, 70, 100), conforme à l'une des revendications précédentes,
**caractérisé en ce que**
sur l'une ou les deux extrémités des surfaces de limitation tubulaires en métal sont fixés des disques ou des anneaux en métal, en mica, en matériau synthétique ou en céramique.

5. Dispositif de chauffage électrique (10, 30, 40, 50, 60, 70, 100), conforme à l'une des revendications précédentes,
**caractérisé en ce que**
l'une ou les deux extrémités des surfaces de limitation tubulaires en métal sont fermées par une masse de coulée, en particulier en caoutchouc au silicone, en résine époxy ou une masse de ciment céramique.

6. Dispositif de chauffage électrique (10, 30, 40, 50, 60, 70, 100), conforme à l'une des revendications précédentes,
**caractérisé en ce que**
le dispositif de chauffage électrique (10, 30, 40, 50, 60, 70, 100) est rempli par plusieurs poudres métalliques différentes, en particulier par plusieurs poudres métalliques différentes qui sont situées dans différentes chambres du dispositif de chauffage électrique (10, 30, 40, 50, 60, 70, 100).

7. Dispositif de chauffage électrique (10, 30, 40, 50, 60, 70, 100), conforme à la revendication 6,
**caractérisé en ce que**
le tube métallique externe (4, 14, 34, 44, 54, 64, 74) et le tube métallique interne (3, 13, 33, 43, 53, 63, 73) comportent un évidement (18, 21, 22, 23, 48, 58, 67, 77) qui s'étend sur la totalité de leur longueur.

8. Dispositif de chauffage électrique (10, 30, 40, 50, 60, 70, 100), conforme à la revendication 7,
**caractérisé en ce qu'**
un thermomètre enveloppe ou un thermo-élément (68, 78) est introduit au travers de l'évidement (18, 21, 22, 23, 48, 58, 67, 77).
